# EUROPÄISCHE PATENTSCHRIFT

(11) **EP 0 805 916 B1**
(45) Veröffentlichungstag und Bekanntmachung des Hinweises auf die Patenterteilung: **10.06.1998**
(21) Anmeldenummer: 96901732.6
(22) Anmeldetag: 12.01.1996
(51) Int. Cl.: F02B 75/02, F02B 53/08

(54) **KONTINUIERLICHES ARBEITSVERFAHREN MIT MÖGLICHST ISOTHERMER VERDICHTUNG FÜR ROTATIONSKOLBEN-WÄRMEKRAFTMASCHINEN**
CONTINUOUS OPERATING MODE WITH THE MOST ISOTHERMAL POSSIBLE COMPRESSION FOR ROTARY PISTON HEAT ENGINES
PROCEDE DE TRAVAIL EN CONTINU AVEC COMPRESSION ISOTHERME AU MAXIMUM POUR DES MOTEURS THERMIQUES A PISTON ROTATIF

(30) Priorität: 17.01.1995 DE 19501189
(43) Veröffentlichungstag der Anmeldung: 12.11.1997
(73) Patentinhaber: Hart, Oskar, 97440 Werneck (DE)
(72) Erfinder: Hart, Oskar, 97440 Werneck (DE)
(74) Vertreter: COHAUSZ HASE DAWIDOWICZ & PARTNER
(86) Internationale Anmeldenummer: EP9600112
(87) Internationale Veröffentlichungsnummer: WO9622456

(56) Entgegenhaltungen:
- DE-A- 2 213 519
- US-A- 1 704 254
- US-A- 3 918 414
- PATENT ABSTRACTS OF JAPAN vol. 004 no. 176 (M-045) ,5.Dezember 1980 & JP,A,55 125322 (NEMOTO ISAMU) 27.September 1980,
- PATENT ABSTRACTS OF JAPAN vol. 007 no. 037 (M-193) ,15.Februar 1983 & JP,A,57 188728 (MITSUBISHI JIDOSHA KOGYO KK) 19.November 1982,

## Beschreibung

Die Erfindung betrifft ein kontinuierliches Arbeitsverfahren für Wärmekraftmaschinen, insbesondere für Rotationskolben-Wärmekraftmaschinen, mit stetiger Förderung und mehrstufiger Verdichtung des Arbeitsgases sowie eine Rotationskolben-Wärmekraftmaschine zur Durchführung des Arbeitsverfahrens.

Bekannte luftverdichtende Wärmekraftmaschinen verdichten ihr Arbeitsgas adiabat oder polytrop. Hubkolbenmotoren können nicht anders verdichten, weil die Verdichtung und die Verbrennung im gleichen Arbeitsraum stattfinden.

Bekannte Drehkolbenmotoren arbeiten ebenso taktweise wie Hubkolbenmotoren. Sie müssen auch mit zündfähigem Gemisch aus hochoktanigem Vergaserkraftstotf betrieben werden, das vor jedem Arbeitstakt von neuem gezündet wird, mit hoher Temperatur und hohem, aber nutzlosem Spitzendruck verbrennt und wegen Sauerstoffmangel nicht vollständig verbrennen kann.

Die kontinuierlich arbeitenden Gasturbinen haben diese Nachteile nicht. Aber Strömungsmaschinen erreichen nur als große, mehrstufige Maschinen und nur bei gleichbleibender, hoher Drehzahl einen wirtschaftlich hohen Arbeitsdruck und Wirkungsgrad. Zum Antrieb von Kraftfahrzeugen, das heißt für schnell wechselnde Drehzahlen und Leistungen sind Gasturbinen nicht geeignet.

Das Arbeitsgas hat nach der Verdichtung schon eine von der Verdichtungshöhe abhängige hohe Temperatur. Zur Arbeitsleistung durch Volumenvergrößerung muß die Gastemperatur noch weiter erhöht werden. Diese zu hohe Arbeitstemperatur kann bei der anschließenden adiabaten Entspannung nicht restlos abgebaut und in Arbeit umgewandelt werden. Die überschüssige Wärme wird mit dem heißen Abgas an die Umgebung abgeführt. Zudem können Kolbenmaschinen diese hohe Temperatur nicht ohne Zwangskühlung ertragen.

Aufgabe der Erfindung ist es, ein Arbeitsverfahren der eingangs genannten Art so zu verbessern, daß bei einem hohen thermischen Wirkungsgrad die zugeführte Arbeitswärme weitestgehend in mechanische Arbeit umgewandelt wird, sowie eine konstruktiv einfache Vorrichtung zur Durchführung des Arbeitsverfahrens zu schaffen, die eine hohe Wirtschaftlichkeit gewährleistet und auch als kleine Maschine einen bei wechselnder Drehzahl konstant bleibenden hohen Arbeitsdruck und Wirkungsgrad erreicht.

Diese Aufgabe wird erfindungsgemäß dadurch gelöst, daß das Arbeitsgas zumindest annähernd isotherm verdichtet, isobar expandiert und adiabat entspannt wird. Eine Rotationskolben-Wärmekraftmaschine mit einem Ringzylinder, dessen Innenraum von einem Rotor mit Scheibenkolben und einem im Ringzylinder befestigten schraubenförmigen Widerlager in Arbeitskammern aufgeteilt ist, die über Ein- und Auslaßöffnungen durch Leitungen miteinander verbunden sind, zur Durchführung des Arbeitverfahrens wird dadurch geschaffen, daß Luftkühler (Zwischenkühler) zur isothermen Verdichtung und eine externe Brennkammer für eine Gleichdruckverbrennung vorgesehen sind.

Durch ein solches Arbeitsverfahren wird die zugeführte Arbeitswärme fast restlos in mechanische Arbeit umgewandelt. Dadurch wird ein hoher thermischer Wirkungsgrad und eine besonders wirtschaftliche Umwandlung von Wärme in mechanische Arbeit erreicht.

Die kontinuierliche Arbeitsweise von Gasturbinen wird dabei besonders vorteilhaft mit einer kontinuierlich arbeitenden Rotationskolben-Wärmekraftmaschine (Rotationskolbenmotor) nachvollzogen.

Der kontinuierlich arbeitende Rotationskolbenmotor umfaßt im wesentlichen einen stetig fördernden, mehrstufig mit möglichst niedriger Temperatur verdichtenden Rotationskolbenverdichter und einen etwa doppelt so großen Heiß-Druckluftmotor. Die Erhitzung des verdichteten Arbeitsgases zur Vergrößerung des Gasvolumens und Arbeitsleistung erfolgt in einer externen Brennkammer durch ununterbrochene Gleichdruckverbrennung.

Das verdichtete Arbeitsgas kann aber auch mittels Lufterhitzer oder Wärmetauscher durch äußere Verbrennung oder konzentrierte Sonnenwärme erhitzt werden.

Aufgrund der niedrigen Verdichungstemperatur muß das verdichtete Arbeitsgas im Idealfall nur von 300 K auf 600 K (327°C) erhitzt werden, um das Gasvolumen zu verdoppeln. Das ist eine wesentliche Verbesserung des thermischen Wirkungsgrades.

Der Motor kann mit Druckluft unter Last gestartet werden und erreicht schon bei niedriger Drehzahl ein hohes Drehmoment, das wegen dem guten Füllungsgrad bis zur Höchstdrehzahl anhält. Bei Schiebebetrieb kann der Motor durch Drosselventile in den Auslaßöffnungen der Entspannungskammern äußerst wirksam abgebremst werden.

Der Verbrennungsmotor arbeitet sehr umweltfreundlich. Er saugt seine Arbeitsluft gleichmäßig und leise an, verbrennt einfachen, zusatz freien Kraftstoff ununterbrochen mit mehrfachem Luftüberschuß bei relativ niedrigem Druck, und das saubere Abgas strömt gleichmäßig und leise ins Freie.

Aus der DE 22 13 519 ist eine Rotationskolbenmaschine mit einem Ringzylinder, dessen Innenraum von einem Rotor mit Scheibenkolben und einem im Ringzylinder befestigten schraubenförmigen Widerlager in Arbeitskammern aufgeteilt ist, die über Ein- und Auslaßöffnungen durch Leitungen miteinander verbunden sind, bekannt, mit der nach entsprechenden Änderungen auch das erfindungsgemäße Arbeitsverfahren durchgeführt werden kann.

Weitere Vorteile und Merkmale der Erfindung ergeben sich aus den Unteransprüchen und der nachfolgenden Beschreibung sowie aus den in den Zeichnungen dargestellten Ausführungsbeispielen.

Es zeigen
- Figur 1:: Darstellung des Arbeitsverfahrens im p,V-Diagranm (Druck in Abhängigkeit vom Volumen),
- Figur 2:: Bekannte Bauart einer Heißluftturbine,
- Figur 3:: Querschnitt durch Rotationskolbenmotor aus Figur 4,
- Figur 4:: Ansicht eines Rotationskolbenmotors, wobei die obere Gehäusehälfte auf der linken Seite abgenommen ist,
- Figur 5:: Schematische Darstellung des Arbeitsverfahrens für ein offenes System in abgewickelter Form und
- Figur 6:: Schematische Darstellung des Arbeitsverfahrens für ein geschlossenes System in abgewickelter Form.

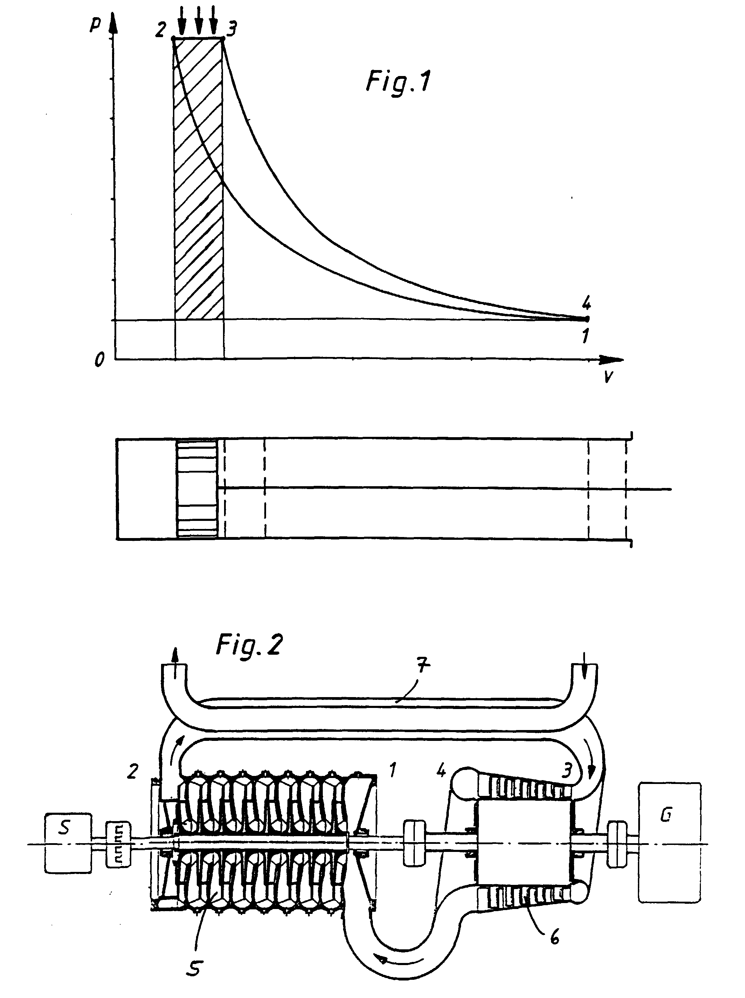

Die Verbesserung des thermischen Wirkungsgrades beruht darauf, daß das Arbeitsgas nach Fig. 1 möglichst isotherm von 1-2 verdichtet wird. Dabei wird während der mehrstufigen Verdichtung durch intensives Kühlen eine Erhöhung der Gastemperatur verhindert, aber keine Wärme höherer Temperatur abgeführt. Das verdichtete Arbeitsgas, das im Idealfall Umgebungstemperatur hat, wird zur isobaren Ausdehnung von 2-3 nur so hoch erhitzt, daß es bei der adiabaten Entspannung von 3-4 wieder auf Umgebungstemperatur abkühlt.

Die in Fig. 1 schraffierte Fläche stellt die bei dem Arbeitsverfahren freiwerdende nutzbare Arbeit dar.

Bei Heißluft- und Gasturbinen ist mittels gekühlter Kreiselverdichter 5 annähernd isotherme Verdichtung möglich (Fig. 2).

Heißluftturbinen können dadurch ohne Zwischenkühlung im geschlossenen Kreisprozeß betrieben und hoch aufgeladen werden. Der Kreiselverdichter 5 wird von einer Turbine 6 angetrieben, in der in einem Lufterhitzer 7 erhitzte Luft entspannt wird. Strömungsmaschinen erreichen aber nur als große, mehrstufige Maschinen und nur bei hoher Drehzahl einen wirtschaftlich hohen Arbeitsdruck und Wirkungsgrad. Rotationskolbenmaschinen erreichen auch als kleine Maschinen einen hohen Arbeitsdruck und Wirkungsgrad, die bei wechselnder Drehzahl konstant bleiben.

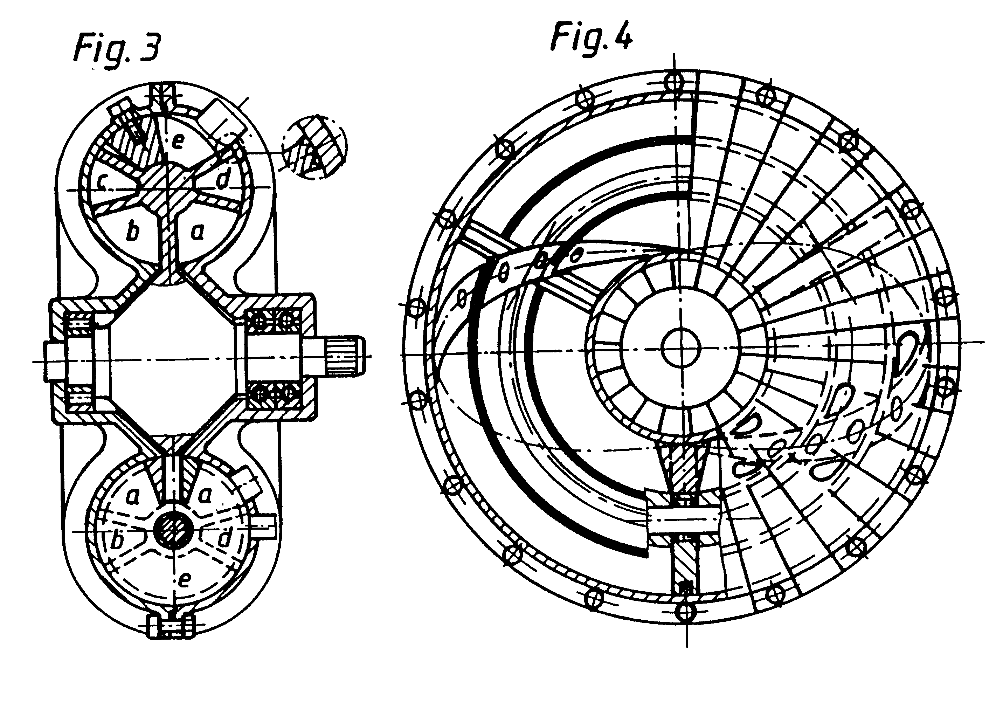

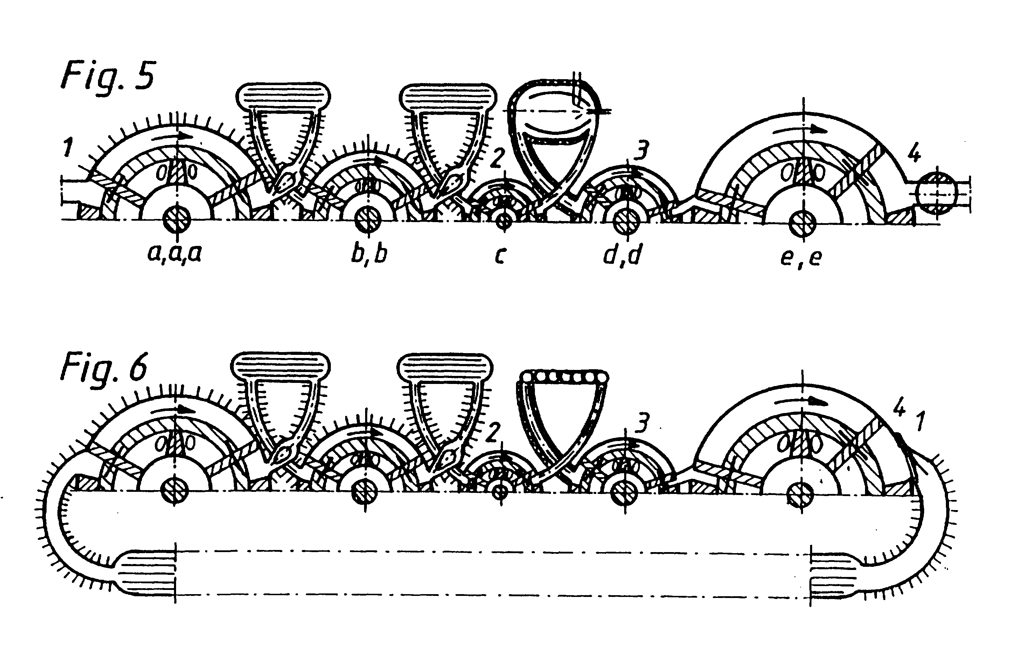

In Ausführung als kontinuierlich arbeitende, luftverdichtende Brennkraftmaschine (Fig. 3 und Fig. 4) sind die Ein- und Auslaßöffnungen der zehn stetig fördernden Arbeitskammern a, b, c, d, e durch Leitungen derart verbunden, daß drei große Arbeitskammern a (Verdichtungakammern) Luft über Luftkühler in zwei kleinere Arbeitskammern b (Verdichtungskammern) fördern, die die verdichtete Arbeitsluft über Luftkühler in eine kleinere Arbeitskammer c fördern. Dabei verhindern Rückschlagventile in den Auslaßöftnungen der Verdichtungskammern a, b, daß verdichtete Arbeitsluft nach Passieren der Scheibenkolben zurückströmt. Das Fördermengenverhältnis der großen Arbeitskammern zu der kleinen Arbeitskammer ergibt das Verdichtungsverhältnis der annähernd isothermen Verdichtung 1-2 (Fig. 5).

Die kleine Arbeitskammer c fördert die verdichtete, möglichst kühle Arbeitsluft über eine externe Brennkammer in zwei kleine Arbeitskammern d (Ausdehnungskammern). In der Brennkammer mit Flammrohr wird einfacher Kraftstoff wie Kerosin nach einmaliger Zündung ununterbrochen bei gleichbleibendem Druck mit mehrfachem Luftüberschuß umweltfreundlich verbrannt.

Wegen der gleichzeitigen Temperaturerhöhung und Volumenausdehnung bleibt der Arbeitsdruck bei Nennlast konstant.

Die bei dieser isobaren Ausdehnung von 2-3 durch den Druck des Arbeitsgases auf die größere Kolbenfläche der Ausdehnungskammern d erzeugte Arbeit ist die Nutzarbeit, die an der Abtriebswelle zur Verfügung steht. Durch Zuführen von Druckluft an dieser Stelle kann die Maschine auch unter Last starten. Die Regelung der Leistung erfolgt nur durch Verändern der Kraftstoffeinspritzmenge

Aus den zwei kleineren Arbeitskammern d wird das heiße Druckgas in zwei große Arbeitskammern e (Entspannungskammern) geleitet, in denen es sich auf Umgebungsdruck und auf Umgebungstemperatur entspannt. Die bei der adiabaten Entspannung 3-4 erzeugte Arbeit muß zum Verdichten der Arbeitsluft aufgewendet werden. Durch Drosselventile in den Auslaßöffnungen der großen Entspannungskammern e kann die Maschine bei Schiebebetrieb äußerst wirksam abgebremst werden.

Die Erhitzung der verdichteten Arbeitsluft kann mittels Lufterhitzer auch durch äußere Verbrennung oder konzentrierte Sonnenwärme erfolgen.

Als Heißluftmotor kann die Anlage im geschlossenen Kreisprozeß betrieben und auf eine mehrfach höhere Leistung aufgeladen werden (Fig. 6). Dabei können die zwei großen Entspannungskammern e noch als erste Verdichtungskammern dienen.

## Patentansprüche

1. Kontinuierliches Arbeitsverfahren für Wärmekraftmaschinen, insbesondere für Rotationskolben-Wärmekraftmaschinen, mit stetiger Förderung und mehrstufiger Verdichtung des Arbeitsgases,
**dadurch gekennzeichnet,**
daß das Arbeitsgas zumindest annähernd isotherm verdichtet (1-2), isobar expandiert (2-3) und adiabat entspannt (3-4) wird.

2. Arbeitsverfahren nach Anspruch 1, **dadurch gekennzeichnet**, daß die Verdichtung (1-2) zweistufig mit Kühlung während der Verdichtung erfolgt.

3. Arbeitsverfahren nach Anspruch 1 oder 2, **dadurch gekennzeichnet,** daß die Verdichtung (1-2) bei Umgebungstemperatur erfolgt.

4. Arbeitsverfahren nach Anspruch 3, **dadurch gekennzeichnet,** daß dem Arbeitsgas bei der isobaren Expansion (2-3) genau soviel Wärme zugeführt wird, daß seine Temperatur bei der adiabaten Entspannung (3-4) auf Umgebungstemperatur abfällt.

5. Arbeitsverfahren nach einem der vorherigen Ansprüche, **dadurch gekennzeichnet,** daß die Wärmezufuhr durch Verbrennung von Kraftstoff in einer Brennkammer erfolgt.

6. Arbeitsverfahren nach einem der Ansprüche 1 bis 4, **dadurch gekennzeichnet,** daß die Wärmezufuhr mittels Lufterhitzer durch äußere Verbrennung oder konzentrierte Sonnenwärme erfolgt.

7. Arbeitsverfahren nach Anspruch 6, **dadurch gekennzeichnet,** daß das Arbeitsverfahren einen geschlossenen Kreisprozeß ausführt.

8. Rotationskolben-Wärmekraftmaschine zur Durchführung des Arbeitsverfahrens nach einem der vorherigen Ansprüche, mit einem Ringzylinder, dessen Innenraum von einem Rotor mit Scheibenkolben und einem im Ringzylinder befestigten schraubenförmigen Widerlager in Arbeitskammern (a, b, c, d, e) aufgeteilt ist, die über Ein- und Auslaßöffnungen durch Leitungen miteinander verbunden sind,
**dadurch gekennzeichnet,**
daß Luftkühler (Zwischenkühler) zur isothermen Verdichtung und eine externe Brennkammer für eine Gleichdruckverbrennung vorgesehen sind.

9. Rotationskolben-Wärmekraftmaschine nach Anspruch 8, **dadurch gekennzeichnet,** daß sie zehn Arbeitskammern (a, a, a, b, b, c, d, d, e, e) aufweist.

10. Rotationskolben-Wärmekraftmaschine nach Anspruch 8 oder 9, **dadurch gekennzeichnet,** daß die Arbeitskammern derart miteinander verbunden sind, daß das Arbeitsgas von drei großen Verdichtungskammern (a) über Luftkühler in zwei kleine Verdichtungskammern (b) förderbar ist.

11. Rotationskolben-Wärmekraftmaschine nach Anspruch 10, **dadurch gekennzeichnet,** daß die Arbeitskammern derart miteinander verbunden sind, daß das Arbeitsgas von den beiden kleinen Verdichtungskammern (b) über Luftkühler in eine Arbeitskammer (c) förderbar ist, wobei die Arbeitskammer (c) kleiner ist als die kleinen Verdichtungskammern (b).

12. Rotationskolben-Wärmekraftmaschine nach Anspruch 11, **dadurch gekennzeichnet,** daß in den Auslaßöffnungen der Verdichtungskammern (a, b) Rückschlagventile angeordnet sind.

13. Rotationskolben-Wärmekraftmaschine nach Anspruch 11 oder 12, **dadurch gekennzeichnet,** daß die Arbeitskammern derart miteinander verbunden sind, daß das Arbeitsgas von der Arbeitskammer (c) über eine externe Brennkammer in zwei Ausdehnungskammern (d) förderbar ist, wobei die Ausdehnungskammern (d) größer sind als die Arbeitskammer (c).

14. Rotationskolben-Wärmekraftmaschine nach Anspruch 13, **dadurch gekennzeichnet,** daß die Arbeitskammern derart miteinander verbunden sind, daß das Arbeitsgas von den beiden Ausdehnungskammern (d) in zwei Entspannungskammern (e) förderbar ist, wobei die Entspannungskammern (e) größer sind als die Ausdehnungskammern (d).

15. Rotationskolben-Wärmekraftmaschine nach Anspruch 14, **dadurch gekennzeichnet,** daß in den Auslaßöffnungen der Entspannungskammern (e) Drosselventile angeordnet sind.

## Claims

1. A continuous operating mode for heat engines, more particularly rotary piston heat engines, with continuous output and multiple stage compression of the working gas, **characterised in that** the working gas is compressed at least substantially isothermally (1-2), expanded isobarically (2-3) and released adiabatically (3-4).

2. An operating mode according to claim 1, **characterised in that** compression (1-2) takes place in two stages, with cooling during compression.

3. An operating mode according to claims 1 or 2, **characterised in that** compression (1-2) takes place at ambient temperature.

4. An operating mode according to claim 3, **characterised in that** in the isobaric expansion (2-3) precisely enough heat is supplied to the working gas to ensure that during adiabatic release (3-4) its temperature drops to ambient temperature.

5. An operating mode according to one of the preceding claims, **characterised in that** the heat is supplied by the combustion of fuel in a combustion chamber.

6. An operating mode according to one of claims 1 to 4, **characterised in that** the heat is supplied by air heaters from external combustion or concentrated solar heat.

7. An operating mode according to claim 6, **characterised in that** the operating mode performs a closed circuit process.

8. A rotary piston heat engine for the performance of the operating mode according to one of the preceding claims, having an annular cylinder whose interior is subdivided by a rotor with disc pistons and a helical abutment attached in the annular cylinder into working chambers (a, b, c, d, e) which are interconnected by lines via inlet and outlet openings, **characterised in that** air coolers (intermediate coolers) are provided for isothermic compression and an external combustion chamber for constant-pressure combustion.

9. A rotary piston heat engine according to claim 8, **characterised in that** it has ten working chambers (a, a, a, b, b, c, d, d, e, e).

10. A rotary piston heat engine according to claims 8 or 9, **characterised in that** working chambers are so interconnected that the working gas can be delivered from three large compression chambers (a) via air coolers to two small compression chambers (b).

11. A rotary piston heat engine according to claim 8, **characterised in that** the working chambers are so interconnected that the working gas can be delivered from the two small compression chambers (b) via air coolers to a working chamber (c), the working chamber (c) being smaller than the small compression chambers (b).

12. A rotary piston heat engine according to claim 11, **characterised in that** non-return valves are disposed in the outlet openings of the compression chambers (a, b).

13. A rotary piston heat engine according to claims 11 or 12, **characterised in that** the working chambers are so interconnected that the working gas can be delivered from the working chamber (c) via an external combustion chamber to two expansion chambers (d), the expansion chambers (d) being larger than the working chamber (c).

14. A rotary piston heat engine according to claim 13, **characterised in that** the working chambers are so interconnected that the working gas can be delivered from the two expansion chambers (d) to two release chambers (e), the release chambers (e) being larger than the expansion chambers (d).

15. A rotary piston heat engine according to claim 14, **characterised in that** throttle valves are disposed in the outlet openings of the release chambers (e).

## Revendications

1. Procédé de travail en continu pour des moteurs thermiques, en particulier des moteurs thermiques à piston rotatif, avec transport stabilisé et compression étagée du gaz moteur,
caractérisé en ce que le gaz moteur est soumis à une compression au moins approximativement isothermique (1-2), soumis à une expansion isobare (2-3) et soumis à une détente adiabatique (3-4).

2. Procédé de travail selon la revendication 1,
caractérisé en ce que la compression (1-2) est effectuée en deux étages avec refroidissement pendant la compression.

3. Procédé de travail selon la revendication 1 ou 2,
caractérisé en ce que la compression (1-2) est effectuée à la température ambiante.

4. Procédé de travail selon la revendication 3,
caractérisé en ce qu'on amène au gaz moteur, pendant l'expansion isobare (2-3), exactement autant de chaleur que nécessaire pour que sa température, pendant la détente adiabatique (3-4), tombe à la température ambiante.

5. Procédé de travail selon l'une des revendications précédentes,
caractérisé en ce que l'amenée de chaleur est effectuée par combustion d'un carburant dans une chambre de combustion.

6. Procédé de travail selon l'une des revendications 1 à 4,
caractérisé en ce que l'amenée de chaleur est effectuée, au moyen d'un réchauffeur d'air, par combustion externe ou chaleur solaire concentrée.

7. Procédé de travail selon la revendication 6,
caractérisé en ce que le procédé de travail effectue un cycle fermé.

8. Moteur thermique à piston rotatif pour la mise en oeuvre du procédé de travail selon l'une des revendications précédentes, avec un cylindre annulaire dont le volume interne est divisé en chambres de travail (a, b, c, d, e), par un rotor à piston plat et une butée hélicoïdale fixée dans le cylindre annulaire, qui sont reliées les unes aux autres, par l'intermédiaire d'ouvertures d'admission et d'échappement, par des conduites,
caractérisé en ce que sont prévus un refroidisseur d'air (refroidisseur intermédiaire) pour la compression isothermique et une chambre de combustion externe pour une combustion à pression constante.

9. Moteur thermique à piston rotatif selon la revendication 8,
caractérisé en ce qu'il comprend dix chambres de travail (a, a, a, b, b, c, d, d, e, e).

10. Moteur thermique à piston rotatif selon la revendication 8 ou 9,
caractérisé en ce que les chambres de travail sont reliées les unes aux autres de telle manière que le gaz moteur peut être transporté depuis trois grandes chambres de compression (a), par l'intermédiaire de refroidisseurs d'air, dans deux petites chambres de compression (b).

11. Moteur thermique à piston rotatif selon la revendication 10,
caractérisé en ce que les chambres de travail sont reliées les unes aux autres de telle manière que le gaz moteur peut être transporté, depuis les deux petites chambres de compression (b), par l'intermédiaire de refroidisseurs d'air, dans une chambre de travail (c), la chambre de travail (c) étant plus petite que les petites chambres de compression (b).

12. Moteur thermique à piston rotatif selon la revendication 11,
caractérisé en ce que des vannes anti-retour sont disposées dans les ouvertures d'échappement des chambres de compression (a, b).

13. Moteur thermique à piston rotatif selon la revendication 11 ou 12,
caractérisé en ce que les chambres de travail sont reliées les unes aux autres de telle manière que le gaz moteur peut être transporté, depuis la chambre de travail (c), par l'intermédiaire d'une chambre de combustion externe, dans deux chambres de dilatation (d), les chambres de dilatation (d) étant plus grandes que la chambre de travail (c).

14. Moteur thermique à piston rotatif selon la revendication 13,
caractérisé en ce que les chambres de travail sont reliées les unes aux autres de telle manière que le gaz moteur peut être transporté, depuis les deux chambres de dilatation (d), dans deux chambres de détente (e), les chambres de détente (e) étant plus grandes que les chambres de dilatation (d).

15. Moteur thermique à piston rotatif selon la revendication 14,
caractérisé en ce que des vannes d'étranglement sont disposées dans les ouvertures d'échappement des chambres de détente (e).
